# EUROPEAN PATENT APPLICATION

(11) **EP 4 492 628 A1**
(43) Date of publication of application: **15.01.2025**
(21) Application number: 22930912.5
(22) Date of filing: 11.03.2022
(51) Int. Cl.: H02J 13/00, H02J 7/00, H02J 3/00, H02J 3/32

(54) **BATTERY MANAGEMENT SYSTEM, AND BATTERY MANAGEMENT METHOD**

(71) Applicant: HONDA MOTOR CO., LTD., Minato-ku Tokyo 107-8556 (JP)
(72) Inventor: IWATA, Kazuyuki, Wako-shi, Saitama 351-0193 (JP)
(74) Representative: Weickmann & Weickmann PartmbB
(86) International application number: PCT/JP2022/010926
(87) International publication number: WO 2023/170931

(57) **Abstract**

A battery management system (1) includes: a battery capacity division section (11) that virtually divides a capacity of a battery (62) mounted on a mobile object (60) into a predetermined number of areas; a capacity change reception section (12) that receives a capacity change request for requesting a change in a capacity of a first area allocated to a first user (U1) be changed; a capacity change adjustment section (13) that, when the capacity change request is received, determines whether or not, a capacity of a second area allocated to a second user (U2) other than the first user (U1) can be changed according to the capacity change request; and an area capacity change section (14) that, when the capacity change adjustment section (13) determines that the capacity of the second area can be changed according to the capacity change request, changes the capacities of the first area and the second area according to the capacity change request.

## Description

### [Technical Field]

The present invention relates to a battery management system, and a battery management method.

### [Background Art]

Conventionally, there has been proposed a device that manages the capacity of a battery mounted on an electric vehicle by virtually dividing the capacity thereof into a first area provided for electricity transmission and reception to/from an electricity facility connected to an electricity grid, and a second area used by a vehicle user, and that displays a remaining amount in the second area on a meter of the vehicle (for example, see Patent Literature 1).

### [Citation List]

### [Patent Literature]

[Patent Literature 1]
International Publication No. WO 2020/148850

### [Summary of Invention]

### [Technical Problem]

The conventional technology described above does not mention changing a battery capacity dividing ratio between the vehicle user and the electricity facility, and there has been scope for improvement to make more effective use of a battery mounted on a mobile object such as a vehicle.

The present invention has been made in view of such background, and an object thereof is to provide a battery management system and a battery management method that can support more effective use of a battery mounted on a mobile object.

### [Solution to Problem]

A first aspect to achieve the object is a battery management system including: a battery capacity division section that makes a battery mounted on a mobile object available to each user within an area allocated to the user, by virtually dividing a capacity of the battery into a predetermined number of areas, and individually allocating the areas to the predetermined number of users; a capacity change reception section that receives a capacity change request for requesting a change in a capacity of a first area, the first area being the area allocated to a first user that is any one user among the predetermined number of users; a capacity change adjustment section that, when the capacity change request is received by the capacity change reception section, determines whether or not a capacity of a second area can be changed according to the capacity change request, the second area being the area allocated to a second user other than the first user among the predetermined number of users; and an area capacity change section that, when the capacity change adjustment section determines that the capacity of the second area can be changed according to the capacity change request, changes the capacities of the first area and the second area according to the capacity change request.

The battery management system may be configured such that when the capacity change request satisfies a condition for acceptance, preset by the second user, of a change in the capacity of the second area, the capacity change adjustment section determines that the capacity of the second area can be changed according to the capacity change request.

The battery management system may be configured such that, a condition that when a matter requested by the capacity change request is an increase in the capacity of the first area, the first user provides the second user with a predetermined consideration in exchange for a decrease in the capacity of the second area according to the capacity change request is set as the condition for acceptance.

The battery management system may be configured such that, a condition that a matter requested by the capacity change request is a change in the capacity of the first area that is limited to a predetermined period or less is set as the condition for acceptance.

The battery management system may be configured to include: an outside temperature recognition section that recognizes an outside temperature around the mobile object; an electricity consumption amount prediction section that predicts an amount of electricity consumption by equipment mounted on the mobile object, based on the outside temperature recognized by the outside temperature recognition section; and a capacity change application section that, when an amount of variation in the amount of electricity consumption predicted by the electricity consumption amount prediction section is a predetermined value or more, applies for the capacity change request to the capacity change reception section.

In the battery management system, the first user may be a user of the mobile object, and the battery management system may be configured to include a capacity change display section that, when the capacity of the first area is changed by the area capacity change section, displays information indicating that the capacity of the first area is changed by using a first display unit displaying a state of charge of the first area, which is included in the mobile object, or a second display unit of a communication terminal used by the first user.

A second aspect to achieve the object is a battery management method that is executed by a computer, the battery management method including: a battery capacity division step of making a battery mounted in a mobile object available to each user within an area allocated to the user, by virtually dividing a capacity of the battery into a predetermined number of areas, and by individually allocating the areas to the predetermined number of users; a capacity change reception step of receiving a capacity change request for requesting a change in the capacity of a first area, the first area being the area allocated to a first user that is any one user among the predetermined number of users; a capacity change adjustment step of, when the capacity change request is received in the capacity change reception step, determining whether or not a capacity of a second area can be changed according to the capacity change request, the second area being the area allocated to a second user other than the first user among the predetermined number of users; and an area capacity change step of, when the capacity change adjustment step determines that the capacity of the second area can be changed according to the capacity change request, changing the capacities of the first area and the second area according to the capacity change request.

### [Advantageous Effect of Invention]

According to the battery management system, it is possible to support more effective use of a battery mounted on a mobile object.

### [Brief Description of Drawings]

[Figure 1] Figure 1 is an explanatory diagram of an aspect of managing a battery of a vehicle by a battery management system.
[Figure 2] Figure 2 is a block diagram of the battery management system.
[Figure 3] Figure 3 is an explanatory diagram of an aspect of changing the capacity of each area in the battery.
[Figure 4] Figure 4 is a first display example of the remaining amount of stored electricity when the capacity of a first area allocated to a vehicle user is changed.
[Figure 5] Figure 5 is a second display example of the remaining amount of stored electricity when the capacity of the first area allocated to the vehicle user is changed.
[Figure 6] Figure 6 is a flowchart of a process of changing the capacity of the first area allocated to the vehicle user.

### [Description of Embodiments]

### [1. Aspect of managing battery of vehicle by battery management system]

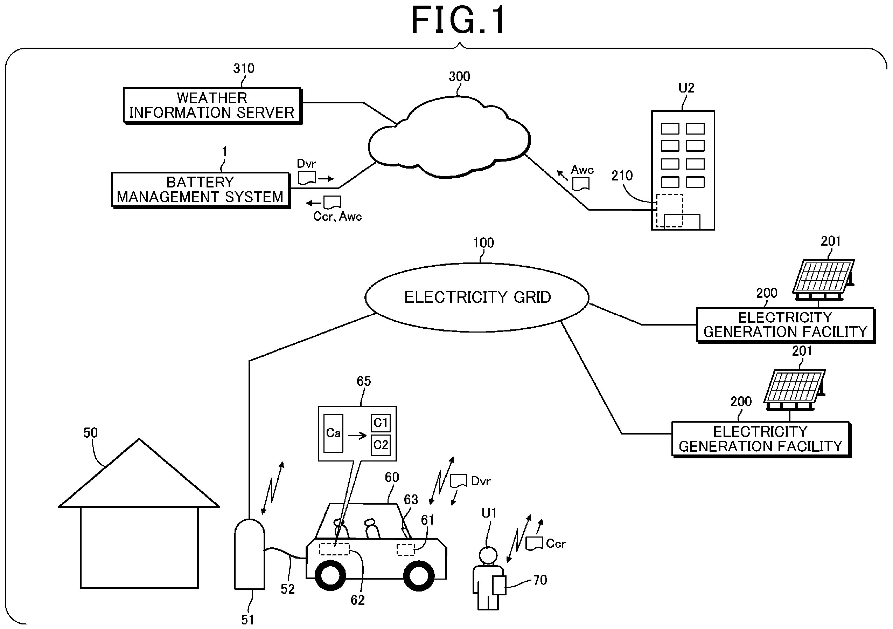

With reference to Figure 1, an aspect of managing a battery 62 of a vehicle 60 by a battery management system 1 of the present embodiment is described. The battery management system 1 virtually divides a capacity Ca of the battery 62 mounted on the vehicle 60 into a first area C1 and a second area C2 as shown at callout 65, and allocates the first area C1 to a vehicle user U1 and the second area C2 to an electricity provider U2.

Thus, the battery management system 1 makes the battery 62 available to the vehicle user U1 within the first area C1, makes the battery 62 available to the electricity provider U2 within the second area C2, and thereby supporting more effective use of the battery 62. The vehicle 60 corresponds to a mobile object in the present disclosure, the vehicle user U1 corresponds to a first user in the present disclosure, and the electricity provider U2 corresponds to a second user in the present disclosure. Note that the capacity of the battery 62 may be divided into three or more areas to be allocated to three or more users.

The vehicle 60 is an electric vehicle (battery electric vehicle, plug-in hybrid electric vehicle, or the like) that uses the battery 62 for a drive source, and is connected to charge-discharge equipment 51 attached to property 50, such as a home of the vehicle user U1, through a charge-discharge cable 52. The battery 62 is charged with electricity supplied from the charge-discharge equipment 51, and supplies electricity to the charge-discharge equipment 51, via the charge-discharge cable 52.

The charge-discharge equipment 51 is connected to a plurality of electricity generation facilities 200 operated by the electricity provider U2 via an electricity grid 100, and generated electricity is supplied from the electricity generation facilities 200 to the electricity grid 100. The battery 62 is charged with surplus generated electricity via the charge-discharge equipment 51, and when generated electricity to the electricity grid 100 is in short supply, discharged electricity from the battery 62 is supplied to the electricity grid 100. Each electricity generation facility 200 generates electricity by using a solar panel 201.

The battery management system 1 performs communication, via a communication network 300, with a vehicle control device 61, the charge-discharge equipment 51, a communication terminal 70 used by the vehicle user U1, a management system 210 of the electricity provider U2, a weather information server 310, and the like. The communication terminal 70 is a smartphone, a mobile phone, a tablet terminal, a notebook personal computer, a desktop personal computer, on-vehicle communication equipment including a car navigation system, or the like.

The battery management system 1 transmits, to the vehicle control device 61, ratio instruction information Dvr for instructing a ratio setting of the first area C1 to the second area C2 in the battery 62 be set (setting of a capacity of each area). Based on the ratio instruction information Dvr, the vehicle control device 61 performs control of the capacity in the battery 62 in such a manner as to allocate the first area C1 for use by the vehicle user U1 (for discharge or regenerative charge accompanying electricity consumption by the vehicle 60, and charge from the charge-discharge equipment 51 based on an operation by the vehicle user U1), and allocate the second area C2 for use by the electricity provider U2 (for charge as a buffer against electricity generated by the electricity generation facilities 200, and discharge accompanying electricity supply to the electricity grid 100) .

The battery management system 1 performs a process of changing the capacities of the first area C1 and the second area C2 in the battery 62, based on a request from the vehicle user U1, a request from the electricity provider U2, or an external factor such as an outside temperature around the vehicle 60 provided from the weather information server 310. For example, upon receiving capacity change request information Ccr that is transmitted from the communication terminal 70 of the vehicle user U1 and that requests an increase in the capacity of the first area C1, the battery management system 1 determines whether or not a condition for acceptance based on acceptance condition information Awc transmitted from the management system 210 of the electricity provider U2 is satisfied.

When the capacity change request satisfies the condition for acceptance, the battery management system 1 changes the capacities of the first area C1 and the second area C2 according to the capacity change request, and transmits, to the vehicle control device 61, ratio instruction information Dvr instructing that the capacities be changed. The vehicle control device 61 having received the ratio instruction information Dvr reflects the changes in capacity of the first area C1 and the second area C2 in charge-discharge control of the battery 62, and, on a display unit 63, makes a display indicating that the capacity of the first area C1 has increased.

Note that although one vehicle user U1 and one electricity provider U2 are depicted in Figure 1 for explanatory convenience, the battery management system 1 performs similar adjustment processes for a plurality of vehicle users and a plurality of electricity providers, with regard to divisional use of batteries mounted on a plurality of vehicles.

### [2. Configuration of battery management system]

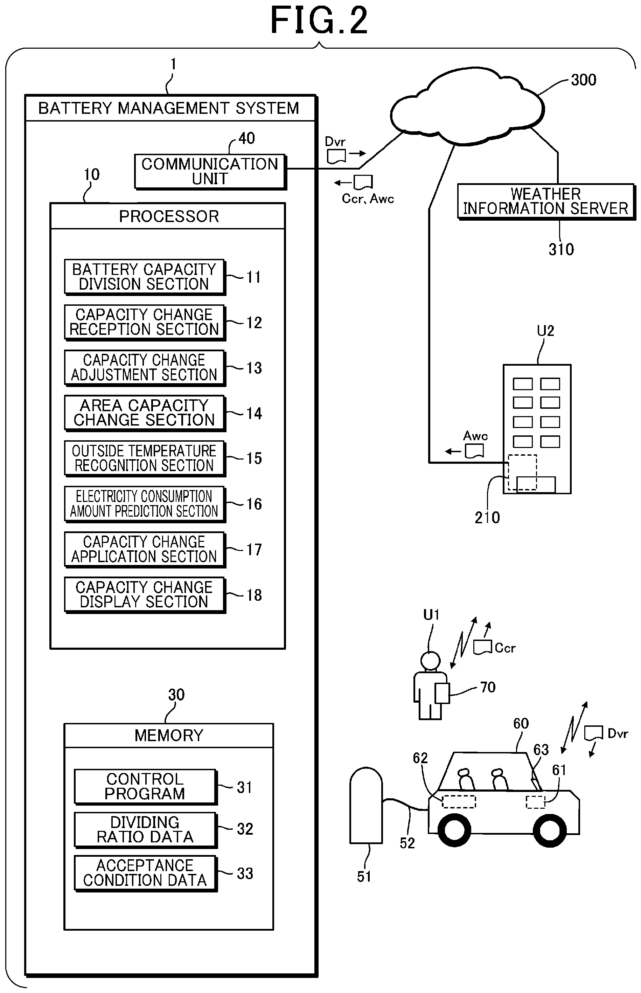

With reference to Figures 2 to 5, a configuration of the battery management system is described. With reference to Figure 2, the battery management system 1 is a computer system including a processor 10, a memory 30, a communication unit 40, and the like. The communication unit 40 performs communication, via the communication network 300, with the vehicle control device 61, the communication terminal 70 used by the vehicle user U1, the management system 210 of the electricity provider U2, the weather information server 310, and the like.

The memory 30 stores a control program 31 for the battery management system 1, dividing ratio data 32 indicating setting of a dividing ratio of the first area C1 to the second area C2 in the battery 62 (a setting of a capacity of each area), and acceptance condition data 33 indicating a condition for acceptance of a change in the capacity of the second area C2. The condition for acceptance is presented by the electricity provider U2.

The processor 10 reads and executes the control program 31 to function as a battery capacity division section 11, a capacity change reception section 12, a capacity change adjustment section 13, an area capacity change section 14, an outside temperature recognition section 15, an electricity consumption amount prediction section 16, a capacity change application section 17, and a capacity change display section 18.

A process executed by the battery capacity division section 11 corresponds to a battery capacity division step of a battery management method in the present disclosure, and a process executed by the capacity change reception section 12 corresponds to a capacity change reception step of the battery management method in the present disclosure. A process executed by the capacity change adjustment section 13 corresponds to a capacity change adjustment step of the battery management method in the present disclosure, and a process executed by the area capacity change section 14 corresponds to an area capacity change step of the battery management method in the present disclosure.

The battery capacity division section 11 virtually divides, as described above, the capacity Ca of the battery 62 mounted on the vehicle 60 into the first area C1 allocated to the vehicle user U1, and the second area C2 allocated to the electricity provider U2, and stores the dividing ratio data 32 indicating a dividing ratio in the memory 30. The battery capacity division section 11 transmits, to the vehicle control device 61, ratio instruction information Dvr instructing that the battery 62 divided into the first area C1 and the second area C2 be used.

The capacity change reception section 12 receives capacity change request information Ccr transmitted from the communication terminal 70 used by the vehicle user U1 and thus receives a capacity change request of the vehicle user U1 with regard to the first area C1. The capacity change adjustment section 13 receives acceptance condition information Awc transmitted from the management system 210 of the electricity provider U2, and recognizes a condition for acceptance of a change in the capacity of the second area C2, which is set by the electricity provider U2.

For the condition for acceptance, for example, a first condition for acceptance and a second condition for acceptance as follows are set.

First condition for acceptance: A predetermined consideration in exchange for a decrease in the capacity of the second area C2 is provided from the vehicle user U1 to the electricity provider U2.

Second condition for acceptance: A period for which the capacity of the second area C2 is decreased is limited to a predetermined period (several days or the like) or less.

The capacity change adjustment section 13 stores the acceptance condition data 33 indicating the conditions for acceptance in the memory 30. When the capacity change request with regard to the first area C1 is received by the capacity change reception section 12, the capacity change adjustment section 13 determines whether or not the capacity of the second area C2 can be changed according to the capacity change request. Specifically, when the capacity change request satisfies the first condition for acceptance or the second condition for acceptance, the capacity change adjustment section 13 determines that the capacity of the second area C2 can be changed according to the capacity change request.

When the capacity change request satisfies neither the first condition for acceptance nor the second condition for acceptance, the capacity change adjustment section 13 transmits the capacity change request information to the management system 210, and inquires of the electricity provider U2 whether or not the capacity of the second area C2 can be changed according to the capacity change request. When capacity change approval information approving of a change in the capacity of the second area C2 according to the capacity change request is received from the management system 210, the capacity change adjustment section 13 determines that the capacity of the second area C2 can be changed according to the capacity change request.

When the capacity change adjustment section 13 determines that the capacity of the second area C2 can be changed according to the capacity change request, the area capacity change section 14 changes the capacities of the first area C1 and the second area C2 according to the capacity change request. According to the changes, the battery capacity division section 11 updates the dividing ratio data 32 to data indicating a dividing ratio of the changed first area C1 to the changed second area C2, and transmits, to the vehicle control device 61, ratio instruction information Dvr instructing that the battery 62 be used according to the changed dividing ratio.

The outside temperature recognition section 15 recognizes an outside temperature around the vehicle 60, based on weather information on the vicinity of a position where the vehicle 60 is parked, which is provided from the weather information server 310, or verified temperature information obtained by an outside temperature sensor mounted on the vehicle 60, which is transmitted from the vehicle control device 61. The electricity consumption amount prediction section 16 predicts power consumption by equipment included in the vehicle 60 (an air-conditioning system, a cooling system for temperature management of the battery 62, or the like), based on the outside temperature around the vehicle 60 recognized by the outside temperature recognition section 15. For example, when the outside temperature is a low temperature that is a predetermined temperature or less, the electricity consumption amount prediction section 16 predicts that electricity consumption will be high for heating by the air-conditioning system.

When the amount of variation in the amount of electricity consumption predicted by the electricity consumption amount prediction section 16 is a predetermined value or more, the capacity change application section 17 applies for a capacity change request to the capacity change reception section 12. The capacity change request requests that the capacity of the first area C1 be changed according to the amount of variation in the amount of electricity consumption. Here, the amount of variation in the electricity consumption may be the amount of variation throughout periods in units such as one day or several days, and an application for a capacity change may have a content requesting that, for example, the first area C1 be increased for a period during which the amount of electricity consumption increases, such as for several months in winter.

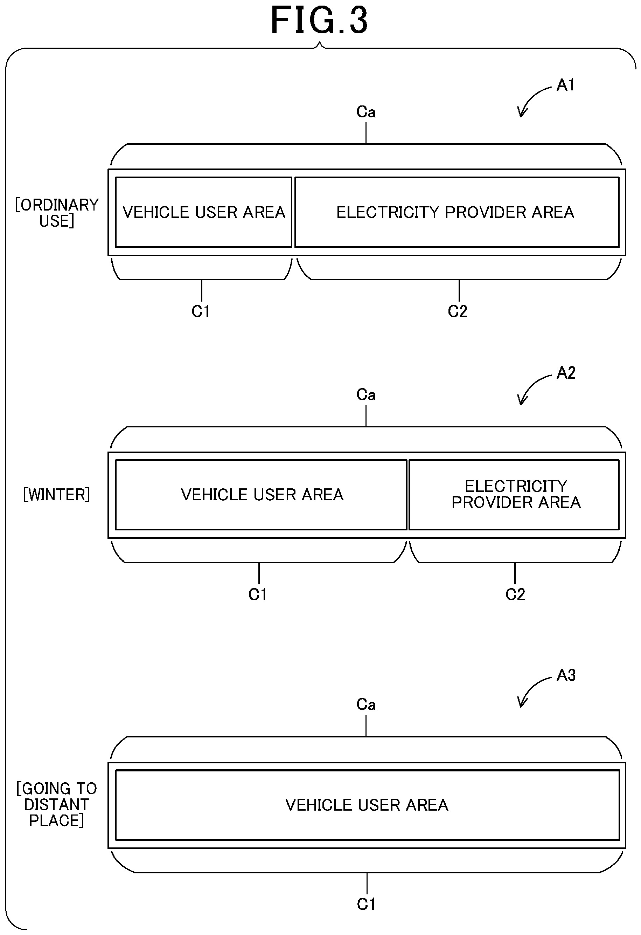

In Figure 3, A2 shows an example in which for a period during which the amount of electricity generated by the solar panels 201 decreases while power consumption by equipment of the vehicle 60 increases in winter, the capacity of the first area C1 is increased and the capacity of the second area C2 is decreased, from settings for ordinary use in A1. A3 shows an example in which when the vehicle user U1 goes to a distant place by the vehicle 60, capacity change request information Ccr to increase the capacity of the first area C1 is transmitted from the communication terminal 70 to the battery management system 1, and in response thereto, the capacity of the first area C1 is increased to the entire capacity Ca of the battery 62.

The capacity change display section 18 transmits, to the vehicle control device 61, display change information instructing that information indicating that the capacity of the first area C1 has been changed by the area capacity change section 14 be displayed. When the display change information is received, the vehicle control device 61 makes a display indicating that the capacity of the first area C1 has been changed, on the display unit 63 included in the vehicle 60.

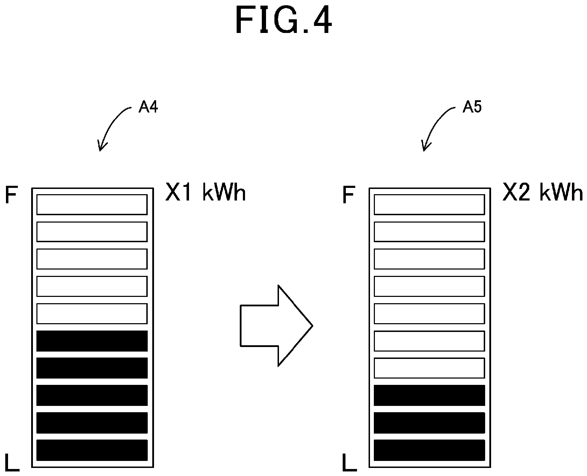

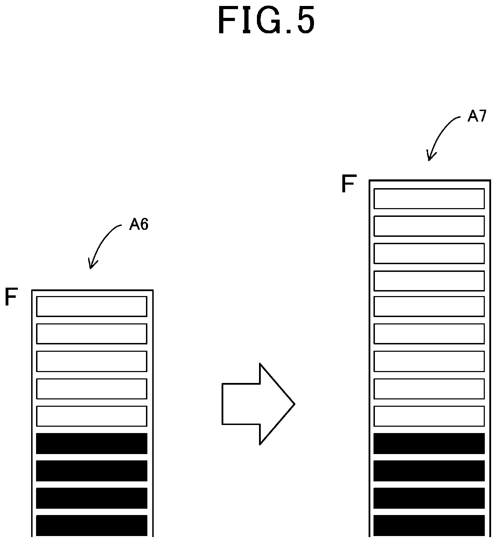

Figures 4 and 5 show examples of the display made when the first area C1 has been changed. Figure 4 is an example of the display in which the capacity of the first area C1 is displayed, and is changed from X1 kWh shown in A4 to X2 kWh shown in A5. Figure 5 is an example of the display in which the size of a display area is changed, and when the capacity of the first area C1 is increased, the size of the display area for the remaining amount of stored electricity is increased from a size shown in A6 to a size shown in A7.

### [3. Process of changing capacity of first area]

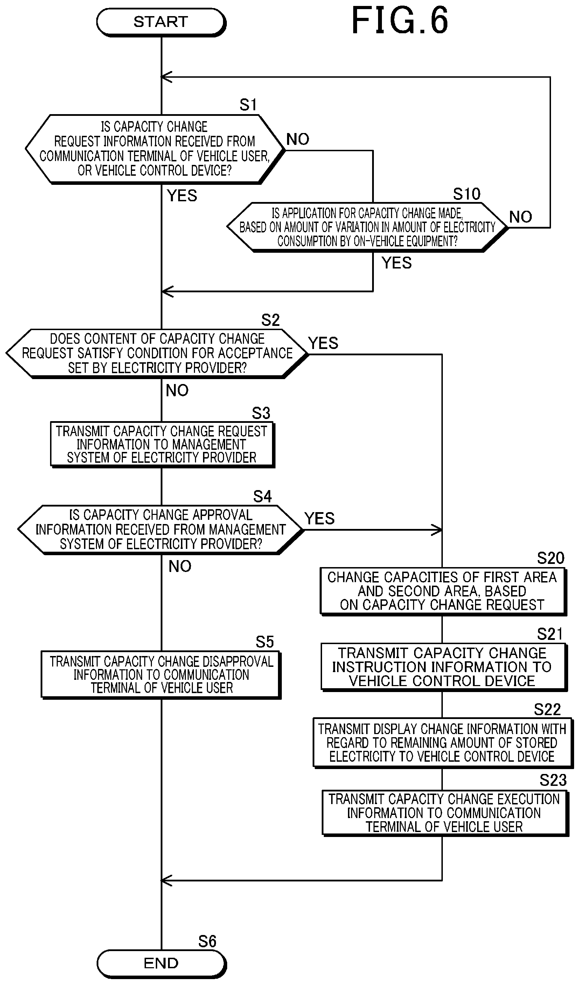

A procedure for changing the capacity of the first area C1, which is executed by the battery management system 1 in a situation shown in Figures 1 and 2, is described by following a flowchart shown in Figure 6.

Through loop processes in steps S1, S10 in Figure 6, when capacity change request information Ccr is received from the communication terminal 70 of the vehicle user U1 in step S1, or when an application for a capacity change is made as a result of the amount of variation in the amount of electricity consumption predicted by the electricity consumption amount prediction section 16 becoming a predetermined value or more in step S10, the capacity change reception section 12 moves the process to step S2.

In step S2, the capacity change adjustment section 13 determines whether or not the content of a capacity change request according to the capacity change request information Ccr or the application for a capacity change satisfies the first condition for acceptance or the second condition for acceptance presented by the electricity provider U2. The capacity change adjustment section 13 moves the process to step S20 when the content of the capacity change request satisfies the first condition for acceptance or the second condition for acceptance, and moves the process to step S3 when the content of the capacity change request satisfies neither the first condition for acceptance nor the second condition for acceptance.

In step S3, the capacity change adjustment section 13 transmits the capacity change request information Ccr to the management system 210 of the electricity provider U2 and inquires of the management system 210 of the electricity provider U2 whether or not to approve of a change in the capacity of the second area C2 according to the capacity change request. In subsequent step S4, the capacity change adjustment section 13 moves the process to step S20 when capacity change approval information approving of a change in the capacity of the second area C2 according to the capacity change request is received from the management system 210 of the electricity provider U2.

When the capacity change approval information is not received, the capacity change adjustment section 13 moves the process to step S5, in which capacity change disapproval information notifying that a change in the capacity of the first area C1 according to the capacity change request is disapproved of is transmitted to the communication terminal 70 of the vehicle user U1. Thus, the notification that a change in the capacity of the first area C1 is disapproved of is displayed on a display unit of the communication terminal 70.

In step S20, the area capacity change section 14 changes the capacities of the first area C1 and the second area C2, based on the capacity change request. In subsequent step S21, the battery capacity division section 11 transmits, to the vehicle control device 61, ratio instruction information Dvr indicating a dividing ratio corresponding to the capacities of the first area C1 and the second area C2 changed by the area capacity change section 14. Thus, control of the battery 62 by the vehicle control device 61 is changed to control based on the changed dividing ratio.

In subsequent step S22, the capacity change display section 18 transmits, to the vehicle control device 61, display change information instructing that the display of the remaining amount of stored electricity be changed according to the change in the capacity of the first area C1. The vehicle control device 61 having received the display change information changes the displayed aspect of the remaining amount of stored electricity in the first area C1, as described above with reference to Figures 4 and 5.

In subsequent step S23, the capacity change display section 18 transmits, to the communication terminal 70 of the vehicle user U1, capacity change execution information notifying that the capacity of the first area C1 has been changed. The communication terminal 70 having received the capacity change execution information makes a display notifying that the capacity of the first area C1 has been changed, on the display unit of the communication terminal 70. Thus, it can be notified to the vehicle user U1 that the capacity of the first area C1 has been changed.

### [4. Other embodiments]

Although the embodiment illustrates the vehicle 60 as a mobile object in the present disclosure, the mobile object in the present disclosure may be any mobile object that includes a battery that is charged and discharged by charge-discharge equipment, and may be an aircraft, a watercraft, or the like.

In the embodiment, a case is described in which a change in the capacity of the second area C2 allocated to the electricity provider U2 is adjusted in response to a capacity change request of the vehicle user U1 with regard to the first area C1. As another embodiment, a case where a change in the capacity of the first area C1 allocated to the vehicle user U1 is adjusted in response to a capacity change request of the electricity provider U2 with regard to the second area C2 can also be handled through similar processes. In such a case, the electricity provider U2 is a first user in the present disclosure, and the vehicle user U1 is a second user in the present disclosure.

As one of conditions for acceptance of a capacity change request of the vehicle user U1 with regard to the first area C1 as illustrated in the embodiment, or as a condition added to the above-described conditions for acceptance, it may be set that an inquiry about whether or not to approve of a capacity change request of one user who shares use of the battery 62 shall be made to another user, and an answer indicating approval of a capacity change shall be obtained from the other user. Thus, it is possible to flexibly and reliably adjust capacity changes.

In the embodiment, the outside temperature recognition section 15, the electricity consumption amount prediction section 16, and the capacity change application section 17 are included, and the processes to change the capacity of the first area C1 are performed based on the amount of electricity consumption by equipment included in the vehicle 60. However, a configuration may be made that omits the outside temperature recognition section 15, the electricity consumption amount prediction section 16, and the capacity change application section 17.

In the embodiment, the capacity change display section 18 is included, and when the capacity of the first area C1 is changed, information indicating that the capacity of the first area C1 has been changed is displayed on the display unit 63 of the vehicle 60 or on the display unit of the communication terminal 70. However, a configuration may be made that omits the capacity change display section 18.

In the embodiment, the battery management system 1 in the present disclosure is configured by a computer system that performs communication with the vehicle 60 on which the battery 62 is mounted. As another embodiment, the battery management system may be configured as a function of the vehicle control device 61. In such a case, a configuration is made such that communication is performed between the vehicle control device 61 and each of the communication terminal 70 of the vehicle user U1 and the management system 210 of the electricity provider U2.

Note that Figure 2 is a schematic diagram showing functional structure of the battery management system 1 that is segmented based on main processes, in order to facilitate the understanding of the invention of the present application, and the structure of the battery management system 1 may be configured based on other segments. A process by each constituent element may be executed by one hardware unit, or may be executed by a plurality of hardware units. The process by each constituent element shown in Figure 6 may be executed by using one program, or may be executed by using a plurality of programs.

### [5. Configurations supported by the embodiment]

The embodiment is a specific example of following configurations.

(Configuration 1) A battery management system including: a battery capacity division section that makes a battery mounted on a mobile object available to each user within an area allocated to the user, by virtually dividing a capacity of the battery into a predetermined number of areas, and individually allocating the areas to the predetermined number of users, ; a capacity change reception section that receives a capacity change request for requesting a change in a capacity of a first area, the first area being the area allocated to a first user that is any one user among the predetermined number of users; a capacity change adjustment section that, when the capacity change request is received by the capacity change reception section, determines whether or not a capacity of a second area can be changed according to the capacity change request, the second area being the area allocated to a second user other than the first user among the predetermined number of users; and an area capacity change section that, when the capacity change adjustment section determines that the capacity of the second area can be changed according to the capacity change request, changes the capacities of the first area and the second area according to the capacity change request.

According to the battery management system in the configuration 1, the capacity change adjustment section determines whether or not the capacity of the first area allocated to the first user can be changed, and the capacity of the first area is changed by the area capacity change section, whereby it is possible to support more effective use of the battery mounted in the mobile object.

(Configuration 2) The battery management system according to configuration 1, wherein when the capacity change request satisfies a condition for acceptance, preset by the second user, of a change in the capacity of the second area, the capacity change adjustment section determines that the capacity of the second area can be changed according to the capacity change request.

According to the battery management system in the configuration 2, by presetting the condition for acceptance of a change in the capacity of the second area, it is possible to immediately change the capacities of the areas in the battery according to the capacity change request.

(Configuration 3) The battery management system according to the configuration 2, wherein a condition that when a matter requested by the capacity change request is an increase in the capacity of the first area, the first user provides the second user with a predetermined consideration in exchange for a decrease in the capacity of the second area according to the capacity change request is set as the condition for acceptance.

According to the battery management system in the configuration 3, by providing the predetermined consideration to the second user, it is possible to immediately increase the capacity of the first area and decrease the capacity of the second area according to the capacity change request.

(Configuration 4) The battery management system according to configuration 2 or 3, wherein a condition that a matter requested by the capacity change request is a change in the capacity of the first area that is limited to a predetermined period or less is set as the condition for acceptance.

According to the battery management system in the configuration 4, when a change in the capacity of the first area according to the capacity change request is for a short period, it is possible to immediately change the capacities of the first area and the second area, without performing a process for gaining consent of the second user.

(Configuration 5) The battery management system according to any one of configurations 1 to 4, including: an outside temperature recognition section that recognizes an outside temperature around the mobile object; an electricity consumption amount prediction section that predicts an amount of electricity consumption by equipment mounted on the mobile object, based on the outside temperature recognized by the outside temperature recognition section; and a capacity change application section that, when an amount of variation in the amount of electricity consumption predicted by the electricity consumption amount prediction section is a predetermined value or more, applies for the capacity change request to the capacity change reception section.

According to the battery management system in the configuration 5, when the amount of electricity consumption by the equipment (an air-conditioning system, a cooling and heating system for the battery, or the like) that is supposed to consume electricity variably according to changes in outside temperature around the mobile object is the predetermined value or more, it is possible to efficiently change the capacities of the first area and the second area, without waiting for the first user to apply for a request to change the capacity of the first area.

(Configuration 6) The battery management system according to any one of configurations 1 to 5, wherein the first user is a user of the mobile object, and the battery management system includes a capacity change display section that, when the capacity of the first area is changed by the area capacity change section, displays information indicating that the capacity of the first area is changed, on a first display unit displaying a state of charge of the first area, which is included in the mobile object, or a second display unit of a communication terminal used by the first user.

According to the battery management system in the configuration 6, it is possible to notify the first user of that the capacity of the first area is changed, through the display by using the first display unit included in the mobile object or the second display unit of the communication terminal.

(Configuration 7) A battery management method that is executed by a computer, the battery management method including: a battery capacity division step of making a battery mounted on a mobile object available to each user within an area allocated to the user, by virtually dividing a capacity of the battery into a predetermined number of areas, and by individually allocating the areas to the predetermined number of users; a capacity change reception step of receiving a capacity change request for requesting a change in a capacity of a first area, the first area being the area allocated to a first user that is any one user among the predetermined number of users; a capacity change adjustment step of, when the capacity change request is received by the capacity change reception step, determining whether or not a capacity of a second area can be changed according to the capacity change request, the second area being the area allocated to a second user other than the first user among the predetermined number of users; and an area capacity change step of, when the capacity change adjustment step determines that the capacity of the second area can be changed according to the capacity change request, changing the capacities of the first area and the second area according to the capacity change request.

By the computer executing the battery management method in configuration 7, it is possible to obtain similar operations and effects to those of the battery management system in configuration 1.

### [Reference Signs List]

1 battery management system, 10 processor, 11 battery capacity division section, 12 capacity change reception section, 13 capacity change adjustment section, 14 area capacity change section, 15 outside temperature recognition section, 16 electricity consumption amount prediction section, 17 capacity change application section, 18 capacity change display section, 30 memory, 31 control program, 32 dividing ratio data, 33 acceptance condition data, 40 communication unit, 50 property, 51 charge-discharge equipment, 52 charge-discharge cable, 60 vehicle (mobile object), 61 vehicle control device, 62 battery, 63 vehicle display unit, 70 communication terminal, 100 electricity grid, 200 electricity generation facility, 201 solar panel, 210 management system of electricity provider, 300 communication network, 310 weather information server, U1 vehicle user (first user), U2 electricity provider (second user), C1 first area, C2 second area

## Claims

1. A battery management system comprising:
a battery capacity division section that makes a battery mounted on a mobile object available to each user within an area allocated to the user, by virtually dividing a capacity of the battery into a predetermined number of areas, and individually allocating the areas to the predetermined number of users;
a capacity change reception section that receives a capacity change request for requesting a change in a capacity of a first area, the first area being the area allocated to a first user that is any one user among the predetermined number of users;
a capacity change adjustment section that, when the capacity change request is received by the capacity change reception section, determines whether or not a capacity of a second area can be changed according to the capacity change request, the second area being the area allocated to a second user other than the first user among the predetermined number of users; and
an area capacity change section that, when the capacity change adjustment section determines that the capacity of the second area can be changed according to the capacity change request, changes the capacities of the first area and the second area according to the capacity change request.

2. The battery management system according to claim 1, wherein when the capacity change request satisfies a condition for acceptance, preset by the second user, of a change in the capacity of the second area, the capacity change adjustment section determines that the capacity of the second area can be changed according to the capacity change request.

3. The battery management system according to claim 2, wherein a condition that when a matter requested by the capacity change request is an increase in the capacity of the first area, the first user provides the second user with a predetermined consideration in exchange for a decrease in the capacity of the second area according to the capacity change request is set as the condition for acceptance.

4. The battery management system according to claim 2 or 3, wherein a condition that a matter requested by the capacity change request is a change in the capacity of the first area that is limited to a predetermined period or less is set as the condition for acceptance.

5. The battery management system according to any one of claims 1 to 4, comprising:
an outside temperature recognition section that recognizes an outside temperature around the mobile object;
an electricity consumption amount prediction section that predicts an amount of electricity consumption by equipment mounted on the mobile object, based on the outside temperature recognized by the outside temperature recognition section; and
a capacity change application section that, when an amount of variation in the amount of electricity consumption predicted by the electricity consumption amount prediction section is a predetermined value or more, applies for the capacity change request to the capacity change reception section.

6. The battery management system according to any one of claims 1 to 5, wherein
the first user is a user of the mobile object, and
the battery management system comprises a capacity change display section that, when the capacity of the first area is changed by the area capacity change section, displays information indicating that the capacity of the first area is changed, by using a first display unit displaying a state of charge of the first area, which is included in the mobile object, or a second display unit of a communication terminal used by the first user.

7. A battery management method that is executed by a computer, the battery management method comprising:
a battery capacity division step of making a battery mounted on a mobile object available to each user within an area allocated to the user, by virtually dividing a capacity of the battery into a predetermined number of areas, and by individually allocating the areas to the predetermined number of users;
a capacity change reception step of receiving a capacity change request for requesting a change in a capacity of a first area, the first area being the area allocated to a first user that is any one user among the predetermined number of users;
a capacity change adjustment step of, when the capacity change request is received by the capacity change reception step, determining whether or not a capacity of a second area can be changed according to the capacity change request, the second area being the area allocated to a second user other than the first user among the predetermined number of users; and
an area capacity change step of, when the capacity change adjustment step determines that the capacity of the second area can be changed according to the capacity change request, changing the capacities of the first area and the second area according to the capacity change request.
